# EUROPÄISCHE PATENTANMELDUNG

(11) **EP 2 672 110 A2**
(43) Veröffentlichungstag der Anmeldung: **11.12.2013**
(21) Anmeldenummer: 13165208.3
(22) Anmeldetag: 24.04.2013
(51) Int. Cl.: F03D 7/00

(54) **Steuerung eines Windenergiesystems**

(30) Priorität: 06.06.2012 DE 102012011216
(71) Anmelder: RWE Innogy GmbH, 45127 Essen (DE)
(72) Erfinder: Koch, Dr. Friedrich, 47623 Kevelaer (DE); Schierenbeck, Olaf, 21220 Seevetal (DE); Schöppenthau, Kai, 21220 Seevetal (DE)
(74) Vertreter: Cohausz & Florack

(57) **Zusammenfassung**

Windenergiesystem (2), insbesondere Offshore Windenergiesystem (2), umfassend mindestens eine Windenergieeinrichtung (4, 6, 8, 22, 24) und mindestens eine durch ein Kommunikationsnetz (12) mit der Windenergieeinrichtung (4, 6, 8, 22, 24) verbundene Zentrale (10), wobei die Zentrale (10) mindestens einen Datenobjektgenerator (10.1) aufweist, wobei der Datenobjektgenerator (10.1) eingerichtet ist, mindestens ein Datenobjekt (X', 4', 6', 8', 22', 24') durch Abbilden der Windenergieeinrichtung (4, 6, 8, 22, 24) in der Zentrale (10) zu erzeugen, und wobei die Zentrale (10) mindestens eine Steuereinrichtung (10.2) aufweist, wobei die Steuereinrichtung (10.2) eingerichtet ist, die Windenergieeinrichtung (4, 6, 8, 22, 24) in Abhängigkeit des Datenobjekts (X', 4', 6', 8', 22', 24') zu steuern.

## Beschreibung

Die Erfindung betrifft ein Windenergiesystem, insbesondere ein Offshore-Windenergiesystem, umfassend mindestens eine Windenergieeinrichtung und mindestens eine durch ein Kommunikationsnetz mit der Windenergieeinrichtung verbundene Zentrale. Darüber hinaus betrifft die Erfindung ein Verfahren zum Steuern eines Windenergiesystems und ein Computerprogramm zur Durchführung des Verfahrens.

Die Nachfrage nach Energie aus regenerativen Quellen steigt stetig. Eine der zur Verfügung stehenden Ressourcen ist hierbei die Windenergie. Eine Windkraftanlage wandelt die kinetische Energie des Windes mittels eines Rotors und eines Generators in elektrische Energie um.

Um den Energieertrag zu maximieren, kann aus mehreren Windkraftanlagen ein Windenergiesystem gebildet werden. Die Windkraftanlagen können insbesondere in Gebieten mit hoher Windwahrscheinlichkeit und -intensität aufgestellt werden. Besonders geeignet sind Standorte auf der offenen See, auch Offshore-Gebiete genannt.

Die Überwachung und Steuerung eines Windenergiesystems ist komplex und aufwendig, da ein Windenergiesystem eine Vielzahl von unterschiedlichen Windenergieeinrichtungen umfassen kann. Problematisch ist insbesondere, dass sich ein Windenergiesystem im Gegensatz zu einem herkömmlichen Kraftwerk, wie ein Kohlekraftwerk, in der Regel aus einer Vielzahl von Windenergieeinrichtungen von unterschiedlichen Herstellern und Anbietern zusammensetzt. Die Integration derartiger Windenergieeinrichtungen in ein Windenergiesystem, welches sich von einer entfernt angeordneten Zentrale steuern lässt, bringt daher hohe Anforderung an die Steuerungsstrukturen mit sich.

Besonders problematisch ist die Steuerung eines Offshore-Windenergiesystems. Grund hierfür ist die besondere Lage der Offshore-Windenergieeinrichtungen auf der offenen See. Dies erfordert in besonderem Maße eine zuverlässige und vorzugweise automatische Steuerung von einer Onshore-Zentrale aufgrund der schwierigen Erreichbarkeit der Offshore-Windenergieeinrichtungen.

Aus der WO 01/77525 A1 ist ein Windenergiesystem bekannt, bei dem die Windenergieeinrichtungen von einem Arbeitsplatz aus gesteuert werden können. Ein Arbeitsplatz ist hierbei über ein Kommunikationsnetz mit den Windenergieeinrichtungen verbunden. Für eine Integration der Windenergieeinrichtungen in ein Windenergiesystem und für eine Fernsteuerung weist in diesem Stand der Technik jede Windenergieeinrichtung eine so genannte SCADA (Supervisory Control and Data Acquisition) Komponente auf. Diese Komponente bildet eine Schnittstelle zwischen den Komponenten der Windenergieeinrichtung und dem Kommunikationsnetz, so dass eine Kommunikation mit dem Arbeitsplatz möglich ist.

Nachteilig bei diesem Windenergiesystem ist jedoch, dass jede Windenergieeinrichtung mit mindestens einer zusätzlichen und speziell angepassten Komponente ausgerüstet sein muss, damit eine Fernsteuerung des Windenergiesystems möglich ist.

Der Erfindung liegt daher die Aufgabe zugrunde, ein Windenergiesystem und ein Verfahren zum Steuern eines Windenergiesystems zur Verfügung zu stellen, welches in einfacher Weise eine zuverlässige Steuerung eines Windenergiesystems, insbesondere eines Offshore-Windenergiesystems, erlaubt.

Die Aufgabe wird erfindungsgemäß bei einem Windenergiesystem, insbesondere einem Offshore-Windenergiesystem gemäß Patentanspruch 1 gelöst. Das Windenergiesystem umfasst mindestens eine Windenergieeinrichtung. Das Windenergiesystem umfasst mindestens eine durch ein Kommunikationsnetz mit der Windenergieeinrichtung verbundene Zentrale. Die Zentrale weist mindestens einen Datenobjektgenerator auf. Der Datenobjektgenerator ist dazu eingerichtet, mindestens ein Datenobjekt durch Abbilden der Windenergieeinrichtung in der Zentrale zu erzeugen. Die Zentrale weist mindestens eine Steuereinrichtung auf. Die Steuereinrichtung ist dazu eingerichtet, die Windenergieeinrichtung in Abhängigkeit des Datenobjekts zu steuern.

Im Gegensatz zum Stand der Technik kann eine zuverlässige und einfache Steuerung eines Windenergiesystems zur Verfügung gestellt werden, indem erfindungsgemäß mindestens eine Windenergieeinrichtung als virtuelles Objekt in der Zentrale abgebildet wird und mittels des virtuellen Objekts die reale Windenergieeinrichtung gesteuert wird. Vorzugsweise kann das gesamte Windenergiesystem virtuell abgebildet werden. Mit anderen Worten können bevorzugt sämtliche Windenergieeinrichtungen als virtuelle Objekte in der Zentrale abgebildet werden.

Das Windenergiesystem bzw. der Windpark kann mindestens eine, bevorzugt eine Vielzahl von Windenergieeinrichtungen aufweisen. Für eine Fernsteuerung der mindestens einen Windenergieeinrichtung kann insbesondere eine entfernt angeordnete Zentrale vorgesehen sein. Die Zentrale kann beispielsweise geeignete Dateneinrichtungen, wie Computer, aufweisen. Bei einem Offshore-Windenergiesystem kann die Zentrale vorzugsweise eine Onshore-Zentrale sein, während die Windenergieeinrichtungen Offshore-Windenergieeinrichtungen sein können. Die Zentrale kann zu Steuerung von mindestens einem Windenergiesystems, bevorzugt von einer Mehrzahl von Windenergiesystemen, vorgesehen sein. Bei der Zentrale kann es sich um einen zentralen Kontrollraum handeln.

Zur Kommunikation der Zentrale mit der mindestens einen Windenergieeinrichtung ist ein Kommunikationsnetz vorgesehen. Als Kommunikationskanäle in dem Kommunikationsnetz können drahtlose und/oder drahtgebundene Kommunikationskanäle eingesetzt werden. Insbesondere können sämtliche Windenergieeinrichtungen direkt oder indirekt, beispielsweise über eine weitere Windenergieeinrichtung, mit der Zentrale kommunizieren.

Es ist erkannt worden, dass eine zuverlässige und gleichzeitig einfache Steuerung von mindestens einer Windenergieeinrichtung erzielt werden kann, wenn die mindestens eine Windenergieeinrichtung in der Zentrale als abgebildetes Datenobjekt zur Verfügung steht. Vorzugsweise können sämtliche Windenergieeinrichtungen jeweils als ein Datenobjekt abgebildet werden. Ein Datenobjekt stellt das virtuelle Abbild einer Windenergieeinrichtung, insbesondere der technischen Eigenschaften und/oder der technischen Funktionen der Windenergieeinrichtung, dar. Die technischen Eigenschaften und/oder technischen Funktionen einer Windenergieeinrichtung können in dem Datenobjekt vorzugsweise als Attribute und/oder Methoden dargestellt werden.

Die in der Zentrale, beispielsweise in einer Datenbank, vorliegenden Datenobjekte können dann von einer Steuereinrichtung zur Steuerung der korrespondierenden realen Windenergieeinrichtung genutzt werden. Beispielsweise können in Abhängigkeit der Attribute und/oder der Methoden eines Datenobjekts die aktuellen technischen Eigenschaften und/oder Funktionen der entsprechenden Windenergieeinrichtung gesteuert werden. Beispielhaft kann das virtuelle Datenobjekt, wie ein Attribut des Datenobjekts, in der Zentrale manuell und/oder automatische modifiziert werden. Eine entsprechende Modifizierung des virtuellen Datenobjekts kann über das Kommunikationsnetz zur Modifizierung der realen Windenergieeinrichtung an selbige (unmittelbar) übertragen werden. Besonders vorteilhaft bei dem erfindungsgemäßen Windenergiesystem ist, dass die tatsächliche Ausbildung einer Windenergieeinrichtung zur Steuerung nicht bekannt sein muss.

Gemäß einer ersten Ausführungsform des erfindungsgemäßen Windenergiesystems kann die Windenergieeinrichtung mindestens einen Sensor zur Erfassung von mindestens einem Zustandsparameterwert eines Zustandsparameters der Windenergieeinrichtung aufweisen. Das zu der Windenergieeinrichtung korrespondierende Datenobjekt kann ein zu dem Zustandsparameter korrespondierendes erstes Attribut aufweisen, wobei der erfasste Zustandsparameterwert der Attributwert des ersten Attributs sein kann. Ein Sensor kann bestimmte physikalische oder chemische Eigenschaften, wie Wärmestrahlung, Temperatur, Feuchtigkeit, Druck, Schall, Helligkeit oder Beschleunigung, und/oder die stoffliche Beschaffenheit seiner Umgebung qualitativ oder als quantitativ erfassen. Eine Windenergieeinrichtung kann eine Mehrzahl von Sensoren, wie einen Näherungssensor, einen Drucksensor, einen Temperatursensor, einen optischen Sensor, einen Stromsensor oder einen Spannungssensor, aufweisen. Die Sensoren ermöglichen, den aktuellen Zustand, insbesondere den Betriebszustand der Windenergieeinrichtung zu erfassen. Gerade bei Offshore-Windenergieeinrichtungen sind in der Regel eine Vielzahl von Sensoren für eine umfassende Fernüberwachung und -steuerung vorgesehen. Es ist erkannt worden, dass eine benutzerfreundliche Überwachung und Steuerung möglich ist, wenn die Betriebszustandsdaten in dem zu der Windenergieeinrichtung korrespondierenden Datenobjekt in der Zentrale vorliegen. Insbesondere kann das virtuelle Datenobjekt bzw. ein Attributwert den aktuellen Betriebszustand der realen Windenergieeinrichtung repräsentieren. Um dies zu ermöglichen, können die erfassten Parameterwerte in entsprechende Attribute des Datenobjekts geschrieben werden.

Alternativ oder zusätzlich zu einem Sensor kann gemäß einer bevorzugten Ausführungsform des erfindungsgemäßen Windenergiesystems die Windenergieeinrichtung mindestens einen Aktor aufweisen. Der Aktor kann in Abhängigkeit eines Steuerungssignals steuerbar sein. Das zu der Windenergieeinrichtung korrespondierende Datenobjekt kann ein zu dem Steuerungssignal korrespondierendes weiteres Attribut aufweisen. Die Steuereinrichtung kann dazu eingerichtet sein, das Steuerungssignal in Abhängigkeit des Attributwerts des weiteren Attributs zu erzeugen.

Ein Aktor kann insbesondere ein elektronisches Steuersignal in eine mechanische Bewegung oder eine andere physikalische Größe umsetzen. Hierzu kann der Aktor (ggf.) eine Steuerschaltung mit einem Prozessor aufweisen. Beispielhafte und nicht abschließende Aktoren, die in einer Windenergieeinrichtung zum Einsatz kommen können, sind eine Ventileinrichtung, eine Antriebseinrichtung oder ein Zylinder. Der mindestens eine Aktor kann über das Kommunikationsnetz von der Zentrale, insbesondere der Steuereinrichtung, angesteuert werden. Das Steuersignal bzw. ein Sollwert kann automatisch oder manuell von einer Bedienperson vorgegeben werden. Insbesondere kann ein entsprechender Attributwert in dem Datenobjekt modifiziert, beispielsweise erhöht oder reduziert werden. Stellt die Steuereinrichtung einen modifizierten Attributwert fest, so kann ein entsprechendes Steuersignal von der Steuereinrichtung generiert werden. Das Steuersignal kann dann an die zu dem Datenobjekt korrespondierende Windenergieeinrichtung, insbesondere den entsprechenden Aktor oder dessen Steuerschaltung, übertragen werden. Dies erlaubt in besonders benutzerfreundlicher Weise eine Steuerung der mindestens einen Windenergieeinrichtung. Es versteht sich, dass Generatoreinrichtungen entsprechend gesteuert werden können.

Wie bereits beschrieben wurde, kann die Zentrale vorzugsweise eine Datenbank zum Speichern des mindestens einen erzeugten Datenobjekts aufweisen. Beispielsweise kann mindestens eine Datenverarbeitungseinrichtung, wie ein Computer oder dergleichen, vorgesehen sein, welche eine Datenbank umfasst und/oder mit einer Datenbank verbunden ist. Die Datenverarbeitungseinrichtung kann den Datenobjektgenerator und/oder die Steuereinrichtung umfassen.

Ferner kann die Zentrale mindestens eine Schnittstelleneinrichtung zum Anzeigen und/oder Modifizieren des mindestens einen Datenobjekts aufweisen. Beispielsweise kann mindestens eine geeignete Anzeigeneinrichtung, wie ein Display, vorgesehen sein. Neben mindestens einer optischen Anzeigeneinrichtung können alternativ oder zusätzlich akustische Einrichtungen zum Anzeigen von Ereignissen, wie ein Alarm und dergleichen, vorgesehen sein. Ferner versteht es sich, dass Eingabeeinrichtungen, wie eine Tastatur, eine Maus, ein Touchscreen, etc. vorgesehen sein können.

Für eine zuverlässige und fehlerfreie Kommunikation zwischen der Zentrale und der mindestens einen Windenergieeinrichtung kann gemäß einer bevorzugten Ausführungsform des Windenergiesystems die Windenergieeinrichtung eine eindeutige Adresse aufweisen. Vorzugsweise weist jede Windenergieeinrichtung des Windenergiesystems eine eindeutige Adresse auf. Das zu der Windenergieeinrichtung korrespondierende Datenobjekt kann eine zu der Adresse der Windenergieeinrichtung korrespondierende Adresse aufweisen. In einfacher Weise können Daten zwischen dem Datenobjekt und der dazu korrespondierenden Windenergieeinrichtung ausgetauscht werden. Beispielsweise können erfasste Sensordaten direkt in das zugehörige Datenobjekt und/oder modifizierte Attributwerte als Steuersignal an die zugehörigen Aktoren übertragen werden. Die entsprechenden Nachrichten können mit der jeweiligen eindeutigen Adresse versehen sein. Vorzugsweise kann bei dem vorliegenden Windenergiesystem das "Reference Designation System for Power Plants" eingesetzt werden.

Unter einer Windenergieeinrichtung ist insbesondere eine technische Einrichtung zu verstehen, welche in dem Windenergiesystem integriert ist und eine (sinnvolle) technische Einheit bildet. Gemäß einer Ausführungsform kann die Windenergieeinrichtung eine Windkraftanlage, ein Energiekabel, eine Substation, eine Messboje oder eine meteorologische Messeinrichtung sein. Vorzugsweise kann ein Windenergiesystem eine Mehrzahl von derartigen Windenergieeinrichtungen umfassen.

Eine Windkraftanlage kann die kinetische Energie des Winds mittels eines Rotors und eines Generators in elektrische Energie umwandeln. Die Windkraftanlage kann über ein Energiekabel mit einer weiteren Windkraftanlage verbunden sein. Beispielsweise kann eine Mehrzahl von Windkraftanlagen zu einem so genannten Strang in Reihe geschaltet sein. Ein derartiger Strang kann mit einer Substation elektrisch über ein Energiekabel verbunden sein. Insbesondere kann die durch die Windkraftanlagen erzeugte elektrische Energie an die Substation übertragen werden. Es versteht sich, dass eine Mehrzahl von Strängen mit einer Substation verbunden sein kann. Ferner versteht es sich, dass bei einer Offshore-Windenergieeinrichtung die Energiekabeln Seekabel sind.

Die Substation bzw. Schaltanlage kann insbesondere ein Umspannwerk umfassen. Von der Schaltanlage kann die erzeugte elektrische Energie über geeignete Seekabel direkt oder über eine Hochspannungs-Gleichstromübertragungsplattform an ein Onshore-Umspannwerk übertragen und von dort ins Netz eingespeist werden. Darüber hinaus kann die Substation mindestens einen Generator, insbesondere Dieselgenerator, umfassen. Ein Dieselgenerator ermöglicht es, den Betrieb auch bei einem Verlust der Rückkoppelenergie einer Hochspannungs-Gleichstromübertragungsplattform aufrechtzuerhalten.

Die mindestens eine meteorologische Messeinrichtung kann insbesondere ein Windmessmast zur Erfassung der aktuellen Windgeschwindigkeit und/oder Windrichtung sein. Eine Messboje kann dazu eingerichtet sein, den aktuellen Seegang zu erfassen.

Es ist ferner erkannt worden, dass eine Windenergieeinrichtung eine Mehrzahl von Subsystemen bzw. Subeinrichtungen aufweisen kann, die jeweils eine technische Untereinheit der Windenergieeinrichtung bilden können. Beispielsweise kann eine Windkraftanlage eine Rotoreinrichtung, eine Generatoreinrichtung, etc. aufweisen. Für eine benutzerfreundliche Bedienung des Windenergiesystems können die Subeinrichtungen als eigenständige Subdatenobjekte abgebildet werden. Um zu verdeutlichen, dass es sich bei einem Datenobjekt um ein Subdatenobjekt handelt, kann vorzugsweise eine Baumstruktur verwendet werden. Die Datenobjekte können kaskadiert strukturiert sein. Beispielsweise kann von einem Windenergieeinrichtungsdatenobjekt eine Mehrzahl von Subdatenobjekten abzweigen, von denen ggf. wieder Subdatenobjekte abzweigen können. Durch die Unterteilung einer Windenergieeinrichtung in eine Mehrzahl an Subeinrichtungen ist eine besonders einfache und benutzerfreundliche Steuerung der Untersysteme möglich.

Gemäß einer bevorzugten Ausführungsform des erfindungsgemäßen Windenergiesystems kann eine Windenergieeinrichtung mindestens eine Subeinrichtung aufweisen. Der Datenobjektgenerator kann eingerichtet sein, mindestens ein Subdatenobjekt durch Abbilden der Subeinrichtung der Windenergieeinrichtung in der Zentrale zu erzeugen. Die Steuereinrichtung kann eingerichtet sein, die Subeinrichtung der Windenergieeinrichtung in Abhängigkeit des Subdatenobjekts zu steuern. Das Subdatenobjekt kann entsprechend dem zuvor beschriebenen Datenobjekt Attribute umfassen. Beispielsweise durch eine Modifizierung der Attributwerte kann die reale Subeinrichtung entsprechend den vorherigen Ausführungen gesteuert werden.

Für eine fehlerfreie Kommunikation mit der Zentrale können die Subeinrichtungen mit eindeutigen Adressen versehen sein. Insbesondere kann es sich um eine Subadresse von der übergeordneten Einrichtung handeln. Die Subdatenobjekte können eine zu der Adresse der Subeinrichtung korrespondierende Adresse aufweisen.

Zwischen den realen Windenergieeinrichtungen können Kopplungen bzw. Verbindungen für z.B. Signalflüsse und/oder Energieflüsse existieren. Für eine umfassende Steuerung des Windenergiesystems können bevorzugt diese Kopplungen in der Zentrale abgebildet werden. Gemäß einer bevorzugten Ausführungsform des erfindungsgemäßen Windenergiesystems wird vorgeschlagen, dass eine erste Windenergieeinrichtung mit mindestens einer weiteren Windenergieeinrichtung gekoppelt sein kann. Das erste zu der ersten Windenergieeinrichtung korrespondierende Datenobjekt kann mit dem weiteren zu der weiteren Windenergieeinrichtung korrespondierenden Datenobjekt gekoppelt sein, derart, dass ein Datenanschluss des ersten Datenobjekts mit einem Datenanschluss des weiteren Datenobjekts gekoppelt ist. Indem beispielsweise ein Dateneingang und ein Datenausgang zweier Datenobjekte miteinander gekoppelt bzw. verbunden ist, kann zwischen zwei Datenobjekten der (reale) Signalfluss und/oder der (reale) Energiefluss zweier Windenergieeinrichtungen in der Zentrale abgebildet werden. Über die Dateneingänge und Datenausgängen verbundener Datenobjekte können Daten zwischen den Datenobjekten ausgetauscht werden. Insbesondere werden hierdurch Auswirkungen von Änderungen in einem Datenobjekt auf andere Datenobjekte berücksichtigt.

Die Daten können beispielsweise von einem oder mehreren Sensor/en in den Windenergieeinrichtungen erfasst worden sein. Entsprechende Daten können an mindestens ein Datenobjekt - wie zuvor beschrieben wurde - übertragen worden sein. Diese Daten können Auswirkungen auf den Betriebszustand von anderen Windenergieeinrichtungen haben.

Auch können von einem Datenobjekt Steuersignale bzw. Sollwerte für einen Aktor eines anderen Datenobjekts vorgegeben werden. Beispielsweise können von einem Windmesseinrichtungsobjekt aktuelle Windmessdaten einem Windkraftanlagenobjekt bereitgestellt werden, um (automatisch) in Abhängigkeit der aktuellen Windmessdaten die reale Windkraftanlage zu steuern.

Die Erzeugung eines Datenobjekts kann grundsätzlich in beliebiger Weise erfolgen. Beispielsweise können für jede Generierung eines Datenobjekts die technischen Spezifikation des realen Objekts erfasst, beispielsweise eingelesen werden. Die technische Spezifikation kann analysiert werden. Es können Attribute und/oder Methoden des Datenobjekts aus der technischen Spezifikation abgeleitet werden. Es ist erkannt worden, dass die Generierung eines Datenobjekts in der zuvor beschriebenen Weise aufwendig ist. Ferner ist erkannt worden, dass eine Vielzahl von Windenenergieeinrichtungen von im Wesentlichen gleicher technischer Bauart ist. Beispielsweise können eine Mehrzahl von gleichartigen Windkraftanlagen, gleichartigen Energiekabeln, gleichartigen Messbojen etc. vorgesehen sein. Um die Generierung von Datenobjekten zu vereinfachen, kann vorzugweise ein Masterdatenobjekt für jede Windenergieeinrichtungsart erstellt werden. Die weiteren Datenobjekte einer Windenergieeinrichtungsart können dann von dem Masterdatenobjekt in einfacher Weise abgleitet werden.

Der Datenobjektgenerator kann gemäß einer bevorzugten Ausführungsform des erfindungsgemäßen Windenergiesystems dazu eingerichtet sein, in Abhängigkeit von technischen Spezifikationen von mindestens einer bestimmten Windenergieeinrichtungsart ein Masterdatenobjekt zu erzeugen. Der Datenobjektgenerator kann dazu eingerichtet sein, mindestens ein zu der Windenergieeinrichtung der Windenergieeinrichtungsart korrespondierendes Datenobjekt aus dem Masterdatenobjekt abzuleiten. Bevorzugt können sämtliche Datenobjekte einer Windenergieeinrichtungsart von dem Masterobjekt abgeleitet werden. Die Implementierung und Einbindung einer neuen Windenergieeinrichtung in das Windenergiesystem kann in einfacher Weise erfolgen. Es ist nicht erforderlich, dass die tatsächliche Realisierung der Windenergieeinrichtung bekannt sein muss.

Es versteht sich, dass einem Hersteller einer Windenergieeinrichtung Vorgaben entsprechenden dem Masterdatenobjekt für die Herstellung einer Windenergieeinrichtung gegeben werden können, damit aus dem Masterdatenobjekt ein zu der Windenergieeinrichtung korrespondierendes Datenobjekt abgeleitet werden kann.

Ein weiterer Aspekt der Erfindung ist ein Verfahren zum Steuern eines Windenergiesystems, insbesondere eines Offshore-Windenergiesystems nach Patentanspruch 9. Das Windenergiesystem umfasst mindestens eine Windenergieeinrichtung und mindestens eine durch ein Kommunikationsnetz mit der Windenergieeinrichtung verbundene Zentrale. Das Verfahren umfasst die Schritte:
- Erzeugen von mindestens einem Datenobjekt durch Abbilden der Windenergieeinrichtung in der Zentrale, und
- Steuern der Windenergieeinrichtung in Abhängigkeit des Datenobjekts.

Das Verfahren kann insbesondere in einem zuvor beschriebenen Windenergiesystem eingesetzt werden. Eine einfache und gleichzeitig zuverlässige Steuerung eines Windenergiesystems kann bereitgestellt werden.

Ein noch weiterer Aspekt der Erfindung ist ein Computerprogramm mit Instruktionen ausführbar auf einem Prozessor derart, dass ein Windenergiesystem gemäß dem zuvor beschriebenen Verfahren gesteuert wird.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Windenergiesystem, das erfindungsgemäße Verfahren und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Windenergiesystems gemäß der vorliegenden Erfindung,
- Fig. 2: eine schematische Ansicht eines weiteren Ausführungsbeispiels eines Windenergiesystems gemäß der vorliegenden Erfindung,
- Fig. 3: eine schematische Ansicht eines Ausführungsbeispiels eines Datenobjekts gemäß der vorliegenden Erfindung,
- Fig. 4: eine schematische Ansicht eines Ausführungsbeispiels von zu Windenergieeinrichtungen korrespondierenden Datenobjekten gemäß der vorliegenden Erfindung,
- Fig. 5: eine schematische Ansicht eines Ausführungsbeispiels einer Baumstruktur von Datenobjekten gemäß der vorliegenden Erfindung, und
- Fig. 6: ein Flussdiagramm eines Ausführungsbeispiels eines Verfahrens gemäß der vorliegenden Erfindung zum Steuern eines Windenergiesystems.

Nachfolgend werden für gleiche Elemente gleiche Bezugszeichen verwendet.

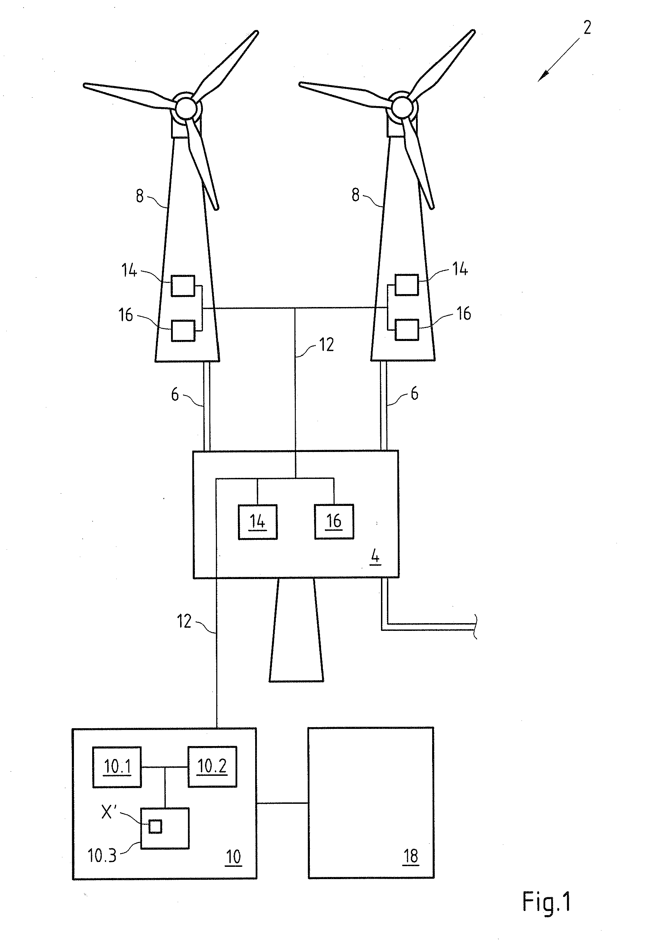

Figur 1 zeigt eine schematische Ansicht eines ersten Ausführungsbeispiels eines Windenergiesystems 2 gemäß der vorliegenden Erfindung. Das Windenergiesystem 2 umfasst eine Mehrzahl von Windenergieeinrichtungen 4, 6, 8 und ein Zentrale 10. Die Zentrale 10 ist über ein Kommunikationsnetz 12 mit den Windenergieeinrichtungen 4, 8 verbunden.

Die Zentrale 10 kann eine Datenverarbeitungseinrichtung umfassen. Insbesondere ist ein Datenobjektgenerator 10.1 und eine Steuereinrichtung 10.2 vorgesehen. Der Datenobjektgenerator 10.1 ist dazu eingerichtet, ein Datenobjekt X' durch Abbilden einer Windenergieeinrichtung 4, 6, 8 zu erzeugen. Die Datenobjekte X' können in einer Datenbank 10.3 der Zentrale 10 gespeichert werden. Die Zentrale 10 ist ferner mit einer Anzeigeneinrichtung 18, insbesondere einer graphischen Anzeigeneinrichtung 18 verbunden.

Um aktuelle Betriebszustände einer Windenergieeinrichtung 4, 8 zu erfassen, können Sensoren 14 vorgesehen sein. Die Sensoren 14 sind über ein Kommunikationsnetz 12 mit der Zentrale 10 verbunden. Die Sensoren 14 können die erfassten Betriebsdaten aktiv an die Zentrale 10 senden und/oder nach Aufforderung durch die Zentrale 10 an die Zentrale 10 senden.

Darüber hinaus umfasst im vorliegenden Ausführungsbeispiel eine Windenergieeinrichtung 4, 8 einen Aktor 16. Ein Aktor 16 ist insbesondere eine Einrichtung, die in Abhängigkeit eines elektrischen Steuersignals eine mechanische Bewegung erzeugt. Ein Aktor 16 ist über das Kommunikationsnetz 12 mit der Zentrale 10 verbunden. Eine Fernsteuerung eines Aktors 16 durch die Zentrale 10 ist möglich. Beispielsweise kann ein Aktor 16 in Abhängigkeit von erfassten Betriebsdaten gesteuert werden. Wie nachfolgend ausgeführt wird, können zur Steuerung des Windenergiesystems die erzeugten Datenobjekte verwendet werden.

Es versteht sich, dass eine Windenergieeinrichtung eine Mehrzahl von Sensoren, Generatoren und Aktoren aufweisen kann.

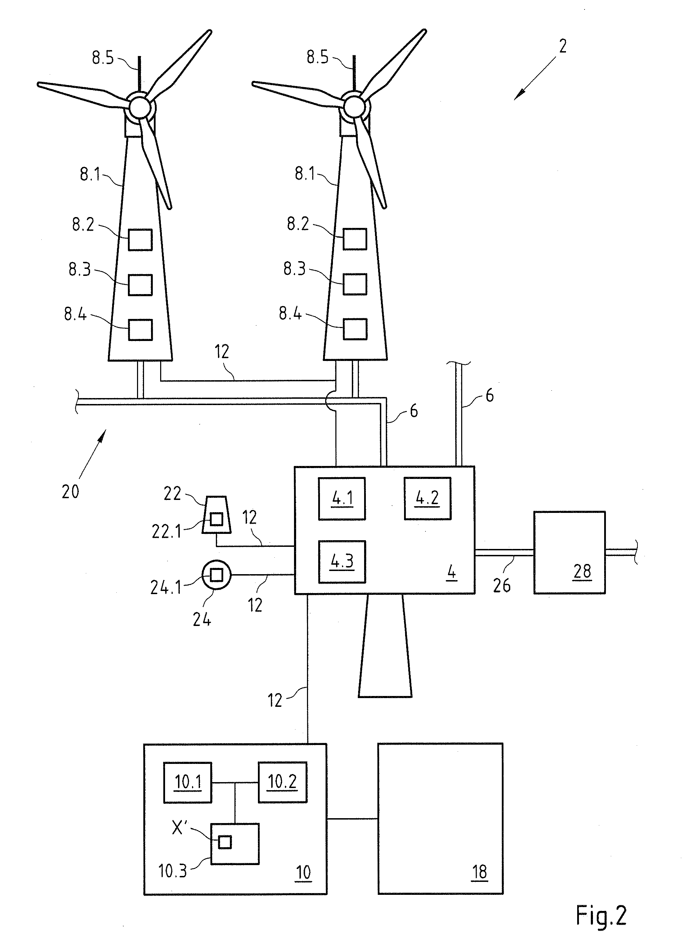

Figur 2 zeigt eine schematische Ansicht eines weiteren Ausführungsbeispiels eines Windenergiesystems 2 gemäß der vorliegenden Erfindung. Im vorliegenden Ausführungsbeispiel handelt es sich bei dem Windenergiesystem 2 um ein Offshore-Windenergiesystem 2. Wie nachfolgend ausgeführt wird, umfasst das Offshore-Windenergiesystem eine Mehrzahl von Windenergieeinrichtungen und eine Zentrale.

Das Offshore-Windenergiesystem 2 umfasst insbesondere eine Substation 4. Die Substation 4, insbesondere eine Offshore-Substation 4, kann eine Mehrzahl von Subeinrichtungen aufweisen. Beispielhaft und nicht abschließend sind vorliegend eine Umspanneinrichtung 4.1 zur Transformation des von den Windkraftanlagen 8 gelieferten Stroms, eine Windkraftanlagensteuerung 4.2 und ein Dieselgenerator 4.3 abgebildet.

Über ein Energiekabel 6 sind mehrere Windkraftanlagen 8 mit der Substation 4 elektrisch verbunden. Das Energiekabel 6 kann mehrere Energiekabel 6 aufweisen. Die Energiekabel 6 sind vorliegend als Seekabel 6 gebildet. Ein Energiekabel 6 ist insbesondere dazu eingerichtet, die von einer Windkraftanlage 8 erzeugte elektrische Energie zur nächsten Windkraftanlage 8 bzw. an die Substation 4 zu übertragen.

Im vorliegenden Ausführungsbeispiel ist eine Mehrzahl von Windkraftanlagen 8 in mehreren Strängen 20 bzw. Strings 20 in Reihe geschaltet. Beispielsweise können acht Stränge mit jeweils sechs Windkraftanlagen in einem Windenergiesystem vorgesehen sein.

Vorliegend ist zu Gunsten einer besseren Übersicht lediglich ein Strang 20 mit zwei Windkraftanlagen 8 abgebildet. Lediglich angedeutet werden in der Figur 2 weitere Stränge.

Ein Ende eines Strangs 20 ist elektrisch über ein Energiekabel mit der Substation 4 verbunden. Das andere Ende kann über ein zusätzliches Energiekabel mit dem Ende eines anderen Stranges, beispielsweise über eine Schaltereinrichtung, elektrisch verbindbar sein. Ferner kann vorgesehen, dass ein Strang optional mit mehreren anderen Strängen verbunden werden kann. Es versteht sich, dass gemäß anderen Varianten der Erfindung die Windkraftanlagen 8 auch in Ringstrukturen angeordnet sein können.

Eine Windkraftanlage 8 kann eine Mehrzahl von Subeinrichtungen 8.1 bis 8.5 umfassen. Beispielhaft und nicht abschließend sind vorliegend eine Windturbineneinrichtung 8.1, eine Generatoreinrichtung 8.2, eine Leistungsverteilungseinrichtung 8.3, eine Klimaeinrichtung 8.4 und ein Messeinrichtung 8.5 zur Erfassung von meteorologischen Daten, wie beispielsweise eine aktuelle Windgeschwindigkeit, dargestellt.

Darüber hinaus können in dem Offshore-Windenergiesystem 2 Erfassungsmittel 22, 24 zum Erfassen von aktuellen Umgebungsparametern, insbesondere von meteorologischen Parametern, vorgesehen sein. Beispielsweise kann mindestens ein Windmessmast 22 mit einer Windsensoreinrichtung 22.1 zur Erfassung der Windrichtung und/oder der Windgeschwindigkeit vorgesehen sein. Es versteht sich, dass ein Windmessmast 22 neben mindestens einer Windsensoreinrichtung 22.1 eine Mehrzahl von weiteren Subeinrichtungen aufweisen kann.

Darüber hinaus ist im vorliegenden Ausführungsbeispiel eine Messboje 24 vorgesehen. Beispielhaft und nicht abschließend ist eine Sensoreinrichtung 24.1 zur Erfassung des Seegangs dargestellt. Auch hier versteht es sich, dass die Messboje 24 eine Mehrzahl von Subeinrichtungen aufweisen kann. Ferner versteht es sich, dass eine Mehrzahl von Windmessmasten und/oder Messbojen vorgesehen sein können.

Die durch die Windkraftanlagen 8 erzeugte elektrische Energie kann über ein weiteres Netzkabel 26 von der Substation 4 direkt oder über eine

Hochspannungs-Gleichstromübertragungsplattform an ein Onshore-Umspannwerk 28 übertragen und von dort ins Netz eingespeist werden.

Wie bereits beschrieben wurde, können die Windenergieeinrichtungen und/oder Subeinrichtungen darüber hinaus eine Vielzahl an Sensoren aufweisen, um die Betriebszustände der einzelnen Windenergieeinrichtungen und/oder Subeinrichtungen zu erfassen. Ferner können die Windenergieeinrichtungen und/oder Subeinrichtungen eine Vielzahl an Aktoren umfassen. Die Aktoren können insbesondere automatisch angesteuert werden, wie nachfolgend näher erläutert werden wird.

Zur Steuerung des Windenergiesystems 2 ist vorliegend eine Zentrale 10 vorgesehen. Die Zentrale 10 kann entfernt von der Substation 4 und insbesondere an Land angeordnet sein. Die Zentrale 10 kann Datenverarbeitungsmittel umfassen. Die Zentrale 10 umfasst einen Datenobjektgenerator 10.1, eine Steuereinrichtung 10.2 und eine Datenbank 10.3.

Darüber hinaus ist vorliegend eine Schnittstelleneinrichtung 18, insbesondere eine geeignete Anzeigeneinrichtung 18, vorgesehen. Die Anzeigeneinrichtung 18 kann dazu eingerichtet sein, einem Benutzer verschiedene Informationen zu visualisieren, wie beispielsweise aktuelle Zustände von verschiedenen Windenergieeinrichtungen. Es versteht sich, dass weitere Schnittstelleneinrichtungen, wie Tastatur, Maus, Drucker, etc. vorgesehen sein können. Insbesondere kann ein virtuelles Abbild des Windenergiesystems in Form einer Mehrzahl von Datenobjekten graphisch auf der Anzeigeneinrichtung 18 dargestellt und durch Schnittstelleneinrichtungen beispielsweise modifiziert werden.

Zur Erzeugung von Datenobjekten X', insbesondere zum Abbilden von mindestens einer Windenergieeinrichtung als Datenobjekt X', ist ein Datenobjektgenerator 10.1 vorgesehen. Der Datenobjektgenerator 10.1 ist dazu eingerichtet, eine reale Windenergieeinrichtung als Datenobjekt X' abzubilden. Insbesondere kann das gesamte Windenergiesystem 2 abgebildet werden. Für eine Abbildung kann zunächst die entsprechende Windenergieeinrichtung analysiert werden und z.B. in eine Mehrzahl von Subeinrichtungen unterteilt werden. Beispielsweise können die technischen Spezifikationen (von dem Hersteller) der jeweiligen Windenergieeinrichtung zur Verfügung gestellt werden. Der Datenobjektgenerator 10.1 ist dazu eingerichtet, in Abhängigkeit der technischen Informationen Datenobjekte X' zu erzeugen. Wie nachfolgend näher ausgeführt wird, kann die technische Spezifikation, also die technischen Eigenschaften und Funktionen der Windenergieeinrichtung in einem Datenobjekt X' als Attribute und/oder Methoden abgebildet werden.

Mittels des Datenobjekts X' kann die Steuereinrichtung 10.2 dann zumindest die dem Datenobjekt X' entsprechende reale Windenergieeinrichtung steuern.

Die einzelnen Windenergieeinrichtungen und/oder die Subeinrichtungen können Daten über das Kommunikationsnetz 12 miteinander und insbesondere mit der Zentrale austauschen. Beispielsweise können drahtlose oder drahtgebundene Kommunikationskanäle vorgesehen sein. Es versteht sich, dass die Subeinrichtungen der verschiedenen Windenergieeinrichtungen ihrerseits wiederum Subeinrichtungen aufweisen können. Ferner versteht es sich, dass die Zentrale 10 eingerichtet sein kann, um zwei oder mehr Windenergiesysteme zu steuern.

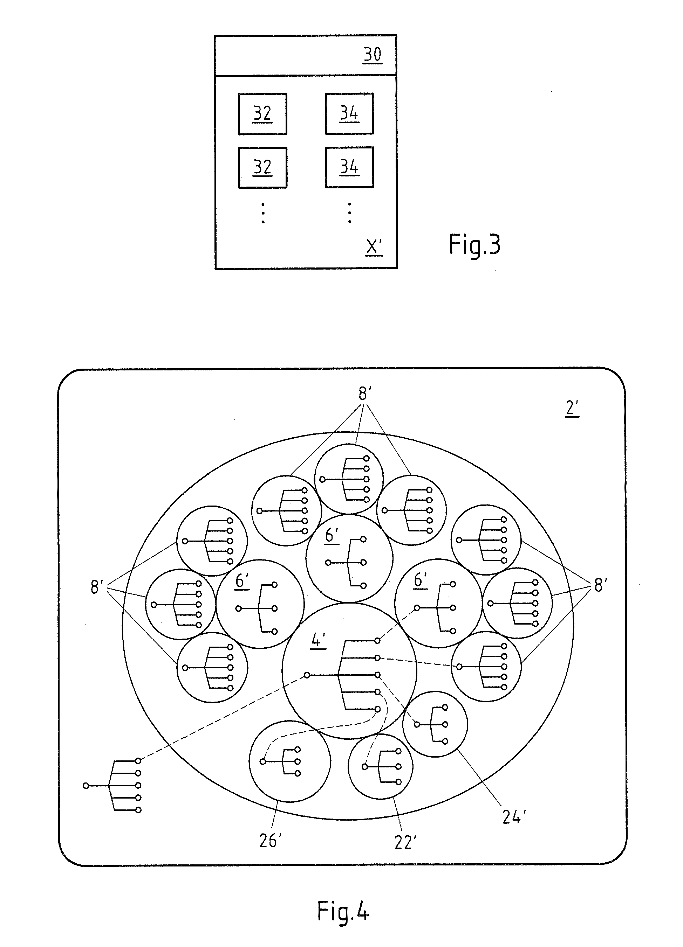

Ein beispielhaftes Datenobjekt X' ist in Figur 3 abgebildet. Um zwischen realen Windenergieeinrichtungen und Datenobjekten zu unterscheiden, sind Datenobjekte vorliegend stets mit einem "' " versehen.

Das Datenobjekt X' kann eine eindeutige Adresse 30 aufweisen. Vorzugsweise kann zur Adressierung der Windenergieeinrichtungen und der Datenobjekte das so genannten "Reference Designation System for Power Plants" (RDS-PP-) verwendet werden. Dies erlaubt in einfacher Weise die Erzeugung einer selbsterklärenden und eindeutigen Adressenstruktur.

Ein Datenobjekt X' kann eine Mehrzahl von Attributen 32 und eine Mehrzahl von Methoden 34 aufweisen. Die Attribute 32 können insbesondere Attributwerte umfassen. Beispielsweise können aktuelle Zustände der Windenergieeinrichtung von Sensoren in der Windenergieeinrichtung erfasst werden. Die Betriebszustände können dann als Attributwerte in das entsprechende Datenobjekt X' geschrieben werden.

Beispielhafte und nicht abschließende Betriebszustände sind der Zustand eines Feuerschutzsystems (z.B. aktiviert oder deaktiviert), die aktuell erzeugte Strommenge von einem Generator einer Windkraftanlage oder die aktuell erzeugte Leistung des Generators, die Temperatur eines technischen Bauteils einer Windenergieeinrichtung, die aktuelle von einem Windmessmast gemessene Windgeschwindigkeit, etc.

Zur Steuerung einer Windenergieeinrichtung können Attributwerte von Attributen, die beispielsweise zu einem realen Aktor korrespondieren, modifiziert werden. Beispielsweise können Sollwerte für Aktoren der Windenergieeinrichtung vorgegeben werden. Die Sollwerte können beispielsweise automatisch aus einem anderen Datenobjekt vorgegeben werden und dem anderen Datenobjekt als Eingang zur Verfügung gestellt werden. Bei einer Änderung eines Attributwertes kann dieser insbesondere in Form eines Steuersignals an die entsprechende Windenergieeinrichtung übertragen und entsprechend eingestellt werden. Dies ist insbesondere durch die eindeutige Adressenstruktur möglich. In einfacher Weise kann durch eine Modifizierung der Attributwerte eines Datenobjekts die zu dem Datenobjekt korrespondierende reale Windenergieeinrichtung gesteuert werden.

Zur Steuerung können auch Methoden 34 im Datenobjekt X' vorgesehen sein. Die Methoden 34 können auch zur Modifizierung der Attribute 32 des Datenobjekts X' oder zur Änderung des Datenobjekts X' vorgesehen sein. Es versteht sich, dass weitere Methoden 34 und Attribute 32 vorgesehen sein können.

Ein Datenobjekt X' kann darüber hinaus mit einem oder mehreren Datenobjekt/en verknüpft sein. Hierzu kann es Dateneingänge und/oder Datenausgänge aufweisen. Vorzugsweise ist der Datenobjektgenerator dazu eingerichtet, die tatsächlichen Verknüpfungen von Windenergieeinrichtungen des Windenergiesystems abzubilden und die Datenobjekte entsprechend zu verknüpfen.

Verknüpfungen von Windenergieeinrichtungen können sich beispielsweise aus dem Energiefluss und/oder Datenfluss zwischen realen Windenergieeinrichtungen ergeben. Beispielsweise ist die Substation 4 über ein Energiekabel 6 mit einer Windkraftanlage 8 elektrisch verbunden. Das Substationsdatenobjekt 4' kann in diesem Fall daher mit dem Windkraftanlagendatenobjekt 8' über ein Energiekabeldatenobjekt 6' verknüpft sein. Hierdurch kann der Stromfluss von der Windkraftanlage 8 über ein Energiekabel 8 an die Subeinrichtung 4 virtuell abgebildet werden.

Figur 4 zeigt beispielhaft eine vereinfachte Struktur von Datenobjekten eines Windenergiesystems gemäß der vorliegenden Erfindung. Neben dem Datenobjekt Windenergiesystem 2' kann mindestens ein Substationsdatenobjekt 4', eine Mehrzahl von Energiekabeldatenobjekten 6', eine Mehrzahl von Windkraftanlagendatenobjekten 8', ein Messmastdatenobjekt 22', ein Messbojendatenobjekt 24' und ein Hochspannungsnetzkabeldatenobjekt 26' vorgesehen sein.

Wie aus der Figur 4 zu erkennen sind, können die einzelnen Objekte 4' bis 26' miteinander verknüpft sein. Zu Gunsten einer besseren Übersicht sind lediglich einige der Verknüpfungen durch gestrichelte Linien dargestellt. So kann das Substationsdatenobjekt 4' mit einer Mehrzahl von Netzenergiekabeldatenobjekten 6', einem Messmastdatenobjekt 22', einem Messbojendatenobjekt 24' und einem Hochspannungsnetzkabeldatenobjekt 26' verbunden sein. Ein Netzenergiekabeldatenobjekt 6' kann mit einer Mehrzahl von Windkraftanlagendatenobjekten 8' verbunden sein. Mit anderen Worten entspricht die Struktur der Datenobjekte 4' bis 26' (im Wesentlichen) der realen Struktur der entsprechenden Windenergieeinrichtungen 4 bis 16 bzw. des Windenergiesystems 2 (vgl. Fig. 2).

Wie bereits beschrieben wurde, kann eine Windenergieeinrichtung eine Mehrzahl von Subeinrichtungen aufweisen. Jede Subeinrichtung kann wieder eine Mehrzahl von Subeinrichtungen aufweisen. Ferner ist erkannt worden, dass eine verbesserte Steuerung erreicht wird, wenn die jeweiligen Windenergieeinrichtungen möglichst detailliert als Datenobjekte abgebildet werden. Als besonders vorteilhaft hat sich die Anordnung von Datenobjekten in einer Baumstruktur gezeigt.

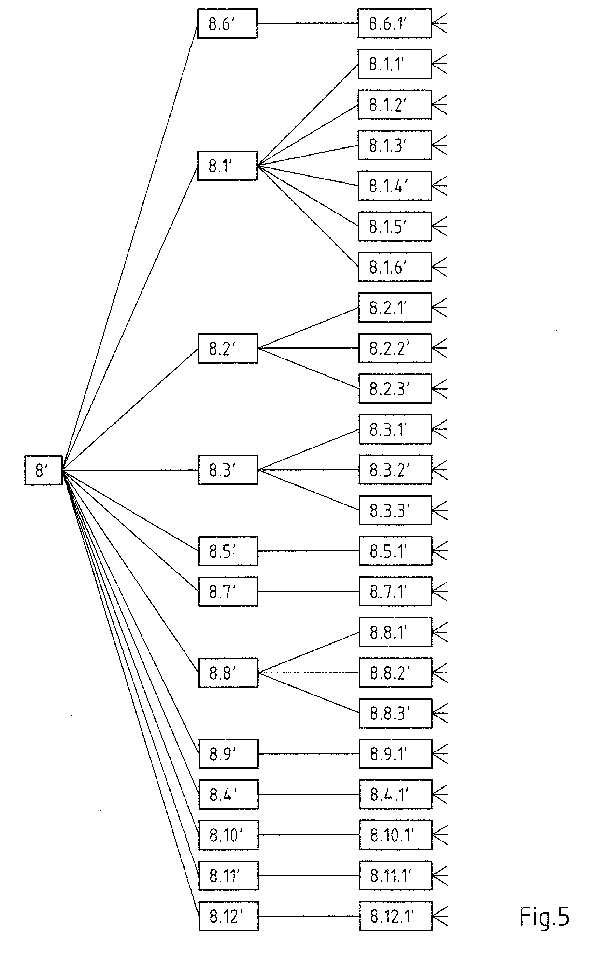

Beispielhaft wird nachfolgend die Unterteilung einer Windkraftanlage 8 in eine Mehrzahl von Subeinrichtungen mit Hilfe der Figur 5 näher erläutert.

Die Figur 5 zeigt das Windkraftanlagendatenobjekt 8' mit einer Mehrzahl von Subeinrichtungen 8.1' bis 8.12' in einer Baumstruktur. Beispielsweise kann ein Windkraftanlagendatenobjekt 8' entsprechend der realen Windkraftanlage 8 ein Windturbinendatenobjekt 8.1', ein Generatoreinrichtungsdatenobjekt 8.2', ein Leistungsverteilungsdatenobjekt 8.3', ein Klimaeinrichtungsdatenobjekt 8.4', ein Messeinrichtungsdatenobjekt 8.5', ein Infrastrukturdatenobjekt 8.6', ein Datenobjekt 8.7' für gemeinsam genutzte Geräte, ein Potentialausgleichungsdatenobjekt 8.8', ein Leistungserzeugungs- und Verteilungsdatenobjekt 8.9', ein Feuerschutzdatenobjekt 8.10', ein Bordkrandatenobjekt 8.11' und ein Betriebsmanagementdatenobjekt 8.12' vorgesehen sein.

Die Subeinrichtungen 8.1' bis 8.12' können ihrerseits in Subeinrichtungen 8.1.1' bis 8.12.1' unterteil werden. Beispielsweise kann das Windturbinendatenobjekt 8.1' ein Rotordatenobjekt 8.1.1', ein Rotorblattanpassungsdatenobjekt 8.1.2', ein Antriebstrangdatenobjekt 8.1.3', ein Gondel-Nachführgetriebedatenobjekt 8.1.4', ein Schmiersystemdatenobjekt 8.1.5' und ein elektrisches Steuerungs- und Schutzsystemdatenobjekt 8.1.6' aufweisen. Das Generatoreinrichtungsdatenobjekt 8.2' kann neben einem Generatordatenobjekt 8.2.1' ein Generatorkühlungsdatenobjekt 8.2.2' und ein Wandlerdatenobjekt 8.2.3' aufweisen. Darüber hinaus kann das Leistungsverteilungsdatenobjekt 8.3' ein Generatorausgangsdatenobjekt 8.3.1', ein Niederspannungshauptverteilerdatenobjekt 8.3.2' und ein Transformatordatenobjekt 8.3.3' aufweisen. Das Klimaeinrichtungsdatenobjekt 8.4' kann ein Turmklimaeinrichtungsdatenobjekt 8.4.1' aufweisen. Das Messeinrichtungsdatenobjekt 8.5' kann ein Windmesserdatenobjekt 8.5.1' umfassen. Ferner kann das Infrastrukturdatenobjekt 8.6' ein Zufahrtsdatenobjekt 8.6.1' aufweisen. Das Datenobjekt 8.7' für gemeinsam genutzte Geräte kann beispielsweise ein Gondeldatenobjekt 8.7.1' aufweisen. Das Potentialausgleichungsdatenobjekt 8.8' kann ein Erdungsdatenobjekt 8.8.1', ein inneres Blitzschutzdatenobjekt 8.8.2' und ein äußeres Blitzschutzdatenobjekt 8.8.3' aufweisen. Das Leistungserzeugungs- und Verteilungsdatenobjekt 8.9' kann ein Windkraftanlagengebäudedatenobjekt 8.9.1' aufweisen. Das Feuerschutzdatenobjekt 8.10' kann ein Feuermelderdatenobjekt 8.10.1'aufweisen. Das Bordkrandatenobjekt 8.11' kann ein Krandatenobjekt 8.11.1' aufweisen. Das Betriebsmanagementdatenobjekt 8.12' kann ein Fernüberwachungsdatenobjekt 8.12.1' aufweisen.

In der Figur 5 wird ferner angedeutet, dass diese Subeinrichtungen ihrerseits wiederum in weitere Subeinrichtungen unterteilt werden können. Es versteht sich, dass die weiteren Windenergieeinrichtungen in ähnlicher Weise unterteilt sein können. Durch die Unterteilung einer Windenergieeinrichtung in eine Mehrzahl von Subeinrichtungen kann eine Subeinrichtung gezielt und benutzerfreundlich gesteuert werden. Insbesondere ist eine unmittelbare Steuerung der Subeinrichtung möglich.

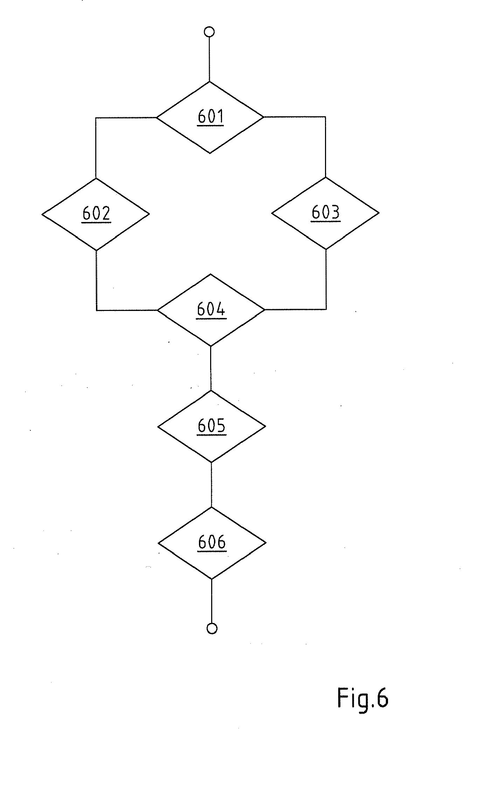

Figur 6 zeigt ein Flussdiagramm eines Ausführungsbeispiels eines Verfahrens gemäß der vorliegenden Erfindung zum Steuern eines Windenergiesystems 2.

Soll ein Datenobjekt X' durch Abbilden einer Windenergieeinrichtung oder einer Subeinrichtung erzeugt werden, kann in einem ersten Schritt 601 geprüft werden, ob für die Windenergieeinrichtungsart oder Subeinrichtungsart bereits ein Masterdatenobjekt vorliegt. Ist dies nicht der Fall, kann in einem Schritt 602 zunächst ein Masterdatenobjekt erzeugt werden. Beispielsweise kann die abzubildende Einrichtung analysiert werden und/oder technische Spezifikationen der Einrichtung in die Zentrale umfassend den Datenobjektgenerator eingelesen werden. Insbesondere können Eigenschaften, Strukturen und/oder Funktionen der Einrichtung bestimmt werden. Beispielsweise kann analysiert werden, welche Zustandsdaten durch Sensoren in der Einrichtung erfassbar sind und/oder welche steuerbaren Aktoren in der Einrichtung vorgesehen sind. Eigenschaften, Strukturen und/oder Funktionen der Einrichtung können in einem Datenobjekt durch Attribute und/oder Methoden abgebildet werden. Ferner kann ein Datenobjekt mit Dateneingängen und Datenausgängen versehen werden, um den Signal- und/oder Energiefluss zwischen Einrichtungen abzubilden.

Es versteht sich, dass alternativ auch die Anforderungen an die Einrichtung vorgegeben werden können und die Einrichtung entsprechend den Anforderungen konstruiert sein muss.

Nach Erzeugung des Masterdatenobjekts kann dieses zum einen in das bereits abgebildete Windenergiesystem eingebunden und abgespeichert werden (Schritt 604). Zum anderen kann das Masterdatenobjekt als Vorlage für die Erzeugung von weiteren Datenobjekten gleichartiger Einrichtungen abgespeichert werden.

Wird in Schritt 601 festgestellt, dass bereits ein Masterdatenobjekt als Vorlage existiert, so kann in Schritt 603 aus dem Masterdatenobjekt ein neues Datenobjekt für die Windenergieeinrichtung abgeleitet werden. Das abgeleitete Datenobjekt kann dann in Schritt 604 in das bereits abgebildete Windenergiesystem integriert werden.

Mittels der erzeugten Datenobjekte kann das reale Windenergiesystem gesteuert werden (Schritte 605 und 606). Über eine Schnittstelleneinrichtung können die aktuellen Attributwerte eines Datenobjekts angezeigt und/oder modifiziert werden. Beispielsweise können aktuelle Zustandswerte einer Windenergieeinrichtung angezeigt werden. In Abhängigkeit der aktuellen Zustandswerte von dieser Windenergieeinrichtung und/oder mindestens einer weiteren Windenergieeinrichtung können weitere Attributwerte automatisch oder manuell modifiziert werden (Schritt 605). Wird eine Modifizierung festgestellt, kann in Schritt 606 ein Steuerungssignal an die reale Einrichtung übertragen werden. Eine benutzerfreundliche und gleichzeitig zuverlässige Steuerung eines komplexen Windenergiesystems kann gewährleistet werden.

## Patentansprüche

1. Windenergiesystem (2), insbesondere Offshore-Windenergiesystem (2), umfassend:
- mindestens eine Windenergieeinrichtung (4, 6, 8, 22, 24), und
- mindestens eine durch ein Kommunikationsnetz (12) mit der Windenergieeinrichtung (4, 6, 8, 22, 24) verbundene Zentrale (10),
**dadurch gekennzeichnet, dass**
- die Zentrale (10) mindestens einen Datenobjektgenerator (10.1) aufweist,
- wobei der Datenobjektgenerator (10.1) eingerichtet ist, mindestens ein Datenobjekt (X', 4', 6', 8', 22', 24') durch Abbilden der Windenergieeinrichtung (4, 6, 8, 22, 24) in der Zentrale (10) zu erzeugen, und
- die Zentrale (10) mindestens eine Steuereinrichtung (10.2) aufweist,
- wobei die Steuereinrichtung (10.2) eingerichtet ist, die Windenergieeinrichtung (4, 6, 8, 22, 24) in Abhängigkeit des Datenobjekts (X', 4', 6', 8', 22', 24') zu steuern.

2. Windenergiesystem (2) nach Anspruch 1, **dadurch gekennzeichnet, dass**
- die Windenergieeinrichtung (4, 6, 8, 22, 24) mindestens einen Sensor (14) zur Erfassung von mindestens einem Zustandsparameterwert eines Zustandsparameters der Windenergieeinrichtung (4, 6, 8, 22, 24) aufweist, und
- das zu der Windenergieeinrichtung (4, 6, 8, 22, 24) korrespondierende Datenobjekt (X', 4', 6', 8', 22', 24') ein zu dem Zustandsparameter korrespondierendes erstes Attribut (32) aufweist, wobei der erfasste Zustandsparameterwert der Attributwert des ersten Attributs (32) ist.

3. Windenergiesystem (2) nach Anspruch 1 oder 2, **dadurch gekennzeichnet, dass**
- die Windenergieeinrichtung (4, 6, 8, 22, 24) mindestens einen Aktor (16) aufweist,
- wobei der Aktor (16) in Abhängigkeit eines Steuerungssignals steuerbar ist,
- wobei das zu der Windenergieeinrichtung (4, 6, 8, 22, 24) korrespondierende Datenobjekt (X', 4', 6', 8', 22', 24') ein zu dem Steuerungssignal korrespondierendes weiteres Attribut (32) aufweist, und
- die Steuereinrichtung (10.2) eingerichtet ist, das Steuerungssignal in Abhängigkeit des Attributwerts des weiteren Attributs (32) zu erzeugen.

4. Windenergiesystem (2) nach einem der vorherigen Ansprüche, **dadurch gekennzeichnet, dass**
- die Windenergieeinrichtung (4, 6, 8, 22, 24) eine eindeutige Adresse aufweist, und
- das zu der Windenergieeinrichtung (4, 6, 8, 22, 24) korrespondierende Datenobjekt (X', 4, 6, 8, 22, 24) eine zu der Adresse der Windenergieeinrichtung (4, 6, 8, 22, 24) korrespondierende Adresse (30) aufweist.

5. Windenergiesystem (2) nach einem der vorherigen Ansprüche, **dadurch gekennzeichnet, dass** die Windenergieeinrichtung (4, 6, 8, 22, 24) eine Windkraftanlage (8), ein Energiekabel (6), eine Substation (5), eine Messboje (24) oder eine meteorologische Messeinrichtung (22) ist.

6. Windenergiesystem (2) nach einem der vorherigen Ansprüche, **dadurch gekennzeichnet, dass**
- eine Windenergieeinrichtung (4, 6, 8, 22, 24) mindestens eine Subeinrichtung (4.1, 4.2, 4.3, 8.1 bis 8.5, 22.1, 24.1) aufweist,
- der Datenobjektgenerator (10.1) eingerichtet ist, mindestens ein Subdatenobjekt (8.1' bis 8.12') durch Abbilden der Subeinrichtung (4.1, 4.2, 4.3, 8.1 bis 8.5, 22.1, 24.1) der Windenergieeinrichtung (4, 6, 8, 22, 24) in der Zentrale (10) zu erzeugen, und
- die Steuereinrichtung (10.2) eingerichtet ist, die Subeinrichtung (4.1, 4.2, 4.3, 8.1 bis 8.5, 22.1, 24.1) der Windenergieeinrichtung (4, 6, 8, 22, 24) in Abhängigkeit des Subdatenobjekts (8.1' bis 8.12') zu steuern.

7. Windenergiesystem (2) nach einem der vorherigen Ansprüche, **dadurch gekennzeichnet, dass**
- eine erste Windenergieeinrichtung (4, 6, 8, 22, 24) mit mindestens einer weiteren Windenergieeinrichtung (4, 6, 8, 22, 24) gekoppelt ist, und
- das erste zu der ersten Windenergieeinrichtung (4, 6, 8, 22, 24) korrespondierende Datenobjekt (X', 4', 6', 8', 22', 24') mit dem weiteren zu der weiteren Windenergieeinrichtung (4, 6, 8, 22, 24) korrespondierenden Datenobjekt (4', 6', 8', 22', 24') gekoppelt ist, derart, dass ein Datenanschluss des ersten Datenobjekt (4', 6', 8', 22', 24') mit einem Datenanschluss des weiteren Datenobjekts (4', 6', 8', 22', 24') gekoppelt ist.

8. Windenergiesystem (2) nach einem der vorherigen Ansprüche, **dadurch gekennzeichnet, dass**
- der Datenobjektgenerator (10.1) eingerichtet ist, in Abhängigkeit von technischen Spezifikationen von mindestens einer bestimmten Windenergieeinrichtungsart ein Masterdatenobjekt zu erzeugen, und
- der Datenobjektgenerator (10.1) eingerichtet ist, mindestens ein zu der Windenergieeinrichtung (4, 6, 8, 22, 24) der Windenergieeinrichtungsart korrespondierendes Datenobjekte (4', 6', 8', 22', 24') aus dem Masterdatenobjekt abzuleiten.

9. Verfahren zum Steuern eines Windenergiesystems (2), insbesondere eines Offshore-Windenergiesystems (2), wobei das Windenergiesystem (2) mindestens eine Windenergieeinrichtung (4, 6, 8, 22, 24) und mindestens eine durch ein Kommunikationsnetz (12) mit der Windenergieeinrichtung (4, 6, 8, 22, 24) verbundene Zentrale (10) umfasst,
**dadurch gekennzeichnet, dass**
- mindestens ein Datenobjekt (X' 4', 6', 8', 22', 24') durch Abbilden der Windenergieeinrichtung (4, 6, 8, 22, 24) in der Zentrale (10) erzeugt wird, und
- die Windenergieeinrichtung (4, 6, 8, 22, 24) in Abhängigkeit des Datenobjekts (X', 4', 6', 8', 22', 24') gesteuert wird.

10. Computerprogramm mit Instruktionen ausführbar auf einem Prozessor derart, dass ein Windenergiesystem (2) gemäß dem Verfahren nach Anspruch 9 gesteuert wird.
